# EUROPÄISCHE PATENTSCHRIFT

(11) **EP 2 459 688 B1**
(45) Veröffentlichungstag und Bekanntmachung des Hinweises auf die Patenterteilung: **09.11.2016**
(21) Anmeldenummer: 10720576.7
(22) Anmeldetag: 05.05.2010
(51) Int. Cl.: C10L 1/198, C10L 10/02, C10L 1/02, C10L 1/18

(54) **VERWENDUNG VON POLYOXYMETHYLENDI(ALKYLPOLYGLYKOL)ETHERN ALS ZUSATZ ZU DIESELKRAFTSTOFFEN ZUR VERMINDERUNG DER RUSSEMISSION IN SELBSTZÜNDUNGSMOTOREN**
USE OF POLYOXYMETHYLENE DI(ALKYLPOLYGLYCOL) ETHERS AS ADDITIVES FOR DIESEL FUELS TO DECREASE SOOT EMISSION IN AUTOIGNITION ENGINES.
UTILISATION D'ÉTHERS DI(ALKYLPOLYGLYCOL) DE POLYOXYMÉTHYLÈNE COMME ADDITIFS POUR CARBURANTS DIESEL POUR DIMINUER L'ÉMISSION DE SUIE DANS LES MOTEURS À AUTO-ALLUMAGE.

(30) Priorität: 31.07.2009 DE 102009035503
(43) Veröffentlichungstag der Anmeldung: 06.06.2012
(73) Patentinhaber: MAN Truck & Bus AG, 80995 München (DE)
(72) Erfinder: JACOB, Eberhard, 82152 Krailing (DE)
(74) Vertreter: Held, Stephan
(86) Internationale Anmeldenummer: PCT/EP2010/056089
(87) Internationale Veröffentlichungsnummer: WO 2011/012339

(56) Entgegenhaltungen:
- EP-A1- 0 014 992
- WO-A1-86/03511
- WO-A1-2007/000428
- GB-A- 1 246 853
- US-A- 3 594 138
- US-A- 5 425 790

## Beschreibung

Die Erfindung betrifft die Verwendung von Polyoxymethylendi(alkylpolyglykol)ethern als Zusatz zu Dieselkraftstoffen.

Es ist bekannt, die Rußemission in Selbstzündungsmotoren durch Zusätze zu Dieselkraftstoffen zu vermindern.

Bei derartigen Zusätzen handelt es sich beispielsweise um Polyoxaalkane der allgemeinen Formel R¹(-O-CH₂-CHR²)ₙ-O-R³, wobei R¹ ein geradkettiger oder verzweigter Alkylrest ist, R² und R³ gleich oder verschieden geradkettige oder verzweigte Alkylreste oder H sind und n ≥ 1 ist. Derartige Polyoxaalkane sind frei von Kohlenstoffatomen mit Oxidationszahlen > +1.

Verwendung finden nur diejenigen Polyoxaalkane, die im Wesentlichen frei von giftigen Bestandteilen sind. Beispielhafte Vertreter dieser Klasse sind Polyethylenglykoldialkylether. Zusätze dieser Polyethylenglykoldialkylether vermindern die Rußbildung bei der dieselmotorischen Verbrennung. So vermindert der Zusatz von 5 Vol.-% Tetraethylenglykoldimethylether zu einem Dieselkraftstoff gemäß EN 590 die Rußemission eines Einzylinderdieselmotors bis zu 70 %, bei konstanter NOₓ-Emission um 27,4 - 54,1% je nach Betriebspunkt. Die Verminderung des Heizwertes des Kraft-stoffs durch den Zusatz von Tetraethylenglykoldimethylether ist gering und beträgt 1,6 %. Der Sauerstoffgehalt der Mischung liegt bei etwa 1,8 %.

Die Verminderung der Rußemission wird der Bildung von sauerstoffhaltigen Spezies bei der Pyrolyse dieser Stoffe im Motor zugeschrieben. Diese hemmen das Wachstum der Rußpartikel, Polyethylenglykoldialkylether haben jedoch gute Lösungsmitteleigenschaften. Daher müssen Werkstoffe, wie beispielsweise Elastomere und Kunststoffe, sowie Beschichtungen, die mit Polyethylenglykoldialkylethern in Berührung kommen, besonders sorgfältig ausgewählt werden. Eine Rückwärtskompatibilität bei alten Motoren ist in der Regel nicht gegeben.

Die Herstellung der Polyethylenglykoldialkylether erfolgt in der Regel über folgendes mehrstufiges Verfahren:
a) Aus Alkanolen und Ethylenoxid werden Alkylglykole hergestellt. Hierbei können vorteilhafterweise biogen hergestellte Alkanole, wie Methanol, Ethanol und 1-Butanol, eingesetzt werden. Die Herstellung von Ethylenoxid erfolgt durch katalytische Oxidation von Ethylen. Ethylen wird in Europa und den USA durch Cracken von Erdölfraktionen hergestellt und könnte bei hohen Erdölpreisen auch, wie dies in Indien bereits der Fall ist, durch Dehydratisierung von Bioethanol gewonnen werden.
b) Die Alkylglykole werden mit Natriumhydroxid zu Natriumalkylglykolaten umgesetzt.
c) Durch Umsetzung der Natriumalkylglykolate mit Alkylchloriden werden die Polyethylenglykoldialkylether erhalten.

### (Arpe "Industrielle Organische Chemie", Seite 176/1777, Wiley-VCH 2007).

Schritt c) ist aufgrund der Verwendung von Alkylchloriden aus Umweltschutzgründen besonders kritisch. Hinzu kommt, dass die Produktionskosten vergleichsweise hoch sind.

Polyoxymethylendialkylether sind aus der WO 2007/000428 bekannt. Sie sind hinsichtlich der Verminderung der Rußemission weniger wirksam. So bewirkt der Zusatz von 10 Vol.-% Oxymethylendimethylether (Methylal), dem Anfangsglied dieser Klasse von Poly-oxaalkanen, zu einem Dieselkraftstoff nach EN 590, trotz des erheblich höheren Sauerstoffgehaltes der Mischung von 4,1 %, lediglich eine Rußminderung von 22,7-41,2 % je nach Motorenbetriebspunkt im Vergleich zur Rußemission eines nichtadditivierten Dieselkraftstoffs nach EN 590 . Die Minderung des Heizwertes beträgt ca. 4 %.

Die Herstellung der Polyoxyalkylendialkylethern, beispielsweise von Polyoxymethylendimethylether, ist aus der WO 2008/074704 bekannt. Zunächst wird Methanol aus Synthesegas gewonnen, welches auch aus Biomethan oder Biomasseabfällen durch Pyrolyse gewonnen werden kann. Anschließend wird Methanol zu Formaldehyd umgesetzt und schließlich erfolgt die Umsetzung des Formaldehyds mit Methanol über die Zwischenstufen Methylal und Trioxan durch saure Katalyse und Polyoxymethylendimethylether wird gewonnen. Polyoxymethylendiethylether und Polyoxymethylendibutylether werden analog unter Einsatz von Ethanol oder 1-Butanol statt des Methanols gewonnen. Dieses Verfahren ist vergleichsweise kostengünstig und kann deshalb mit der Herstellung von Biomass-to-Liquids, BtL aus Pyrolysegas konkurrieren. Die Kosten für die Bereitstellung von Anlagen zur Herstellung von Polyoxymethylendimethylethern sind deutlich niedriger als die der Fischer-Tropsch- und Hydrocracking-Anlagen, die zur Herstellung von BtL benötigt werden.

Die Herstellung von Polyoxymethylendialkylethern, insbesondere von Polyoxymethylendimethylether, Polyoxymethylendiethylether und Polyoxymethylendibutylether, ist somit grundsätzlich aus nachwachsenden Rohstoffen möglich. Die Verwendung von Biomasse-Synthesegas als Ausgangsstoff ermöglicht somit die Bereitstellung von Biokraftstoffen der zweiten und dritten Generation.

Polyoxymethylendimethylether besitzen gute Verträglichkeit mit häufig eingesetzten Werkstoffen, wie Elastomeren und Kunststoffen.

Aus der EP-A-0 014 992 sind Polyether der allgemeinen Formel R'-O-(A-O-)ₙ-R² bekannt, in der A für eine Ethylen- oder 1,2-Propylengruppe steht, R¹ für einen C₁-C₈-Alkylrest und R² für Wasserstoff oder einen C₁-C₄-Alkylrest steht und n einen Wert von 1 bis 5 hat. Derartige Polyether werden Dieselkraftstoffen in Mengen von 15 bis 90 Vor.-% zugesetzt um herkömmliche Dieselkraftstoffe gänzlich oder zum Teil durch Kraftstoffe auf Basis von Methanol und vor allem Ethanol zu ersetzen.

Aus der WO 86/03511 sind sauerstoffhaltige Methanderivate der allgemeinen Formel

Ri-O-CH₂-O-R₂ mit R₁ und R₂ als Alkylgruppen bekannt. Diese kommen als Kraftstoffzusätze in Frage.

Der Erfindung liegt die Aufgabe zugrunde, Zusätze zu Dieselkraftstoffen zur Verminderung der Rußemission in Selbstzündungsmotoren bereitzustellen, die die Nachteile bekannter Zusätze weitgehend ausschließen. Dabei soll die Rußemission in Selbstzündungsmotoren vermindert werden und es soll ein möglichst hoher Brennwert erzielt werden. Hinzu sollen die Zusätze einfach und kostengünstig, möglichst aus biogenen Rohstoffen erhältlich sein. Die Zusätze sollen ungiftig, vorzugsweise auch nicht gesundheitsschädlich und damit nicht kennzeichnungspflichtig sein. Des Weiteren sollen die Zusätze eine gute Werkstoffkompatibilität aufweisen.

Erfindungsgemäß wird diese Aufgabe durch die Verwendung von Polyoxymethylendi(alkylpolyglykol)ethern der allgemeinen Formel

RO(CH₂CH₂O)ₙ(CH₂O)ₘ(CH₂CH₂O)ₙR,

wobei R ein Alkylrest, n ≤ 3 und m ≤ 6 ist, als Zusatz zu Dieselkraftstoffen zur Verminderung der Rußemission in Selbstzündungsmotoren, wobei die Polyoxymethylendi(alkylpolyglykol)ether in einer Menge von weniger als 15 Vol.-%, bezogen auf den Dieselkraftstoff, eingesetzt werden, gelöst.

Die Herstellung der Polyoxymethylendi(alkylpolyglykol)ether ist an sich bekannt. Diese erfolgt aus Formaldehyd, Paraformaldehyd oder Trioxan, und Alkylglykolen, RCH₂CH₂OH, oder Alkylpolyglykolen, R(CH₂CH₂O)ₙH, durch säurekatalysierte Kondensationsreaktionen wie folgt:

(CH₂O)ₘ + 2 ROCH₂CH₂OH → ROCH₂CH₂O(CH₂O)ₘCH₂CH₂OR + H₂O (1)

und

(CH₂O)ₘ + 2 RO(CH₂CH₂O)ₙH → RO(CH₂CH₂O)ₙ(CH₂O)ₘ(CH₂CH₂O)ₙR + H₂O (2).

Für R = CH₃ und n = 1 ist diese Herstellung in der US-A-4 093 666 beschrieben, für R = n-C₄H₉ und n = 1 ist diese aus der US-A-2 397 514 bekannt.

Die Synthese dieser Stoffe führt zum Einbau der für die Rußminderung besonders aktiven Polyethylenglykolgruppe, (-CH₂-CH₂-O-). Mit Hilfe der vorstehend genannten säurekatalysierten Kondensationsreaktionen (1) und (2) und vermeidet somit den kostspieligen Syntheseschritt der Veretherung der Alkylglykole über deren Natriumsalze durch Umsetzung mit Alkylchloriden, wodurch der umweltschädliche Einsatz von Alkylchloriden vermieden werden kann. Gleichzeitig werden Oxymethylengruppen, -CH₂-O-, eingebaut, die die Rohstoffkosten und die Aggressivität gegenüber Werkstoffen um so mehr vermindern, je höher m ist. Mit größerem m steigt auch der Anteil des biogenen Kohlenstoffs, falls Biomethan als Ausgangsprodukt für deren Synthese gewählt wird.

Weiterhin wird die Toxizität von Polyethylenglykoldimethylethern der Formel CH₃O(CH₂CH₂O)ₙCH₃, mit n = 1 bis 3, was deren Verwendung als Kraftstoffzusatz ausschließt, durch den Einbau der Oxymethylengruppe, CH₂O, beseitigt. So ist beispielsweise der erfindungsgemäße Oxymethylendi(methylglykol)ether, auch: Bis(2-methoxyethoxy)methan der Formel CH₃OCH₂CH₂OCH₂OCH₂CH₂OCH₃, nicht kennzeichnungspflichtig, während der ähnlich aufgebaute Diethylenglykoldimethylether, CH₃OCH₂CH₂OCH₂CH₇OCH₃, dessen rußmindernde Eigenschaften gut bekannt sind (SAE paper 2000-01-2886) aufgrund seiner hohen Toxizität als Kraftstoffzusatz nicht verwendet werden kann.

Die erfindungsgemäß verwendeten Polyoxymethylendi(alkylpolyglykol)ether führen bei Verwendung als Zusatz zu Dieselkraftstoffen zu einer deutlichen Verminderung der Rußemission. Ferner wird ein höherer Brennwert erzielt. Wie vorstehend gezeigt, sind die erfindungsgemäß verwendeten Polyoxymethylendi(alkylpolyglykol)ether einfach und kostengünstig, auch aus biogenen Rohstoffen, erhältlich. Ferner zeigen sie ausreichend gute Werkstoffkompatibilität. So kommt es beispielsweise nicht zu einem Aufschwellen von Elastomeren. Es ist auch eine gute Mischbarkeit mit den Dieselkraftstoffen gegeben, da keine Mischungslücken auftreten. Schließlich ist es von Vorteil, dass bei der erfindungsgemäßen Verwendung vorteilhafterweise auf den Einsatz von giftigen nitrathaltigen Verbindungen, z.B. EHN, 2-Ethylhexylnitrat, als Zündbeschleuniger verzichtet werden kann, da Polyoxymethylendi(alkylpolyglykol)ether ebenfalls eine Zündbeschleunigerwirkung besitzen und dadurch auch die NOₓ-Emission erniedrigt wird.

Der Begriff "Polyoxymethylendi(alkylpoiyglykol)ether" schließt Gemische derartiger Ether ausschließlich ein.

In einer bevorzugten Ausführungsform ist n = 1 und m ≤ 6. Dies hat den Vorteil, dass die Verbindungen besonders kostengünstig hergestellt werden können und eine sehr gute Materialverträglichkeit besitzen

In einer weiteren bevorzugten Ausführungsform ist n = 1 oder 2 und m ≤ 3. Derartige Verbindungen haben den Vorteil, dass sie kostengünstig hergestellt werden können und eine gute Materialverträglichkeit besitzen

Besonders bevorzugt sind Verbindungen, bei denen n = 1 oder 2 und m = 1 ist. Diese besitzen den weiteren Vorteil, dass sie bei sehr guter Rußminderungswirkung eine vergleichsweise hohe Flüchtigkeit besitzen, die den Anteil einer vorgemischten und damit emissionsarmen, homogenen Verbrennung im Motor erhöht.

In einer bevorzugten Ausführungsform ist n = 1 und m ≤ 6. In einer weiteren bevorzugten Ausführungsform ist n = 1 und m ≤ 3. In einer weiteren bevorzugten Ausführungsform ist n = 1 und m = 1.

Nachstehend aufgeführte Polyoxymethylendi(alkylglyicol)ether der allgemeinen Formel Formel RO(CH₂CH₂O)ₙ(CH₂O)ₘ(CH₂CH₂O)ₙR, wobei R ein Alkylrest, n = 1 und m ≤ 6 ist, sind besonders bevorzugt geeignet:
Oxymetilylendi(methylglykol)ether (C₇H₁₆O₄; Kettenlänge 11; Molekulargewicht 164,2; Sauerstoffgehalt 39%),
Dioxymethylendi(methylglykol)ether (C₈H₁₈O₅; Kettenlänge 13; Molekulargewicht 194,2; Sauerstoffgehalt 41,2%),
Trioxymethylendi(methylglykol)ether (C₉H₂₀O₆; Kettenlänge 15; Molekulargewicht 224,2; Sauerstoffgehalt 42,8%),
Tetraoxymethylendi(methylglykol)ether (C₁₀H₂₂O₇; Kettenlänge 17; Molekulargewicht 254,3; Sauerstoffgehalt 44%),
Pentaoxymethylendi(methylglykol)ether (C₁₁H₂₄O₈; Kettenlänge 19; Molekulargewicht 284,3; Sauerstoffgehalt 45%),
Hexaoxymethylendi(methylglykol)ether (C₁₂H₂₆O₉; Kettenlänge 21; Molekulargewicht 314,3; Sauerstoffgehalt 45,8%),
Oxymethylendi(ethylglykol)ether (C₉H₂₀O₄; Kettenlänge 13; Molekulargewicht 192,3; Sauerstoffgehalt 33,3%),
Dioxymethylendi(ethylglykol)ether (C₁₀H₂₂O₅; Kettenlänge 15; Molekulargewicht 222,3; Sauerstoffgehalt 36%),
Trioxymethylendi(ethylglykol)ether (C₁₁H₂₄O₆; Kettenlänge 17; Molekulargewicht 252,3; Sauerstoffgehalt 38%),
Tetraoxymethylendi(ethylglykol)ether (C₁₂H₂₆O₇; Kettenlänge 19; Molekulargewicht 282,3; Sauerstoffgehalt 39,7%),
Oxymethylendi(butylglykol)ether (C₁₃H₂₈O₄; Kettenlänge 17; Molekulargewicht 248,4; Sauerstoffgehalt 25,8%),
Dioxymethylendi(butylglykol)ether (C₁₄H₃₀O₅; Kettenlänge 19; Molekulargewicht 278,4; Sauerstoffgehalt 28,7%),
Trioxymethylendi(butylglykol)ether (C₁₅H₃₂O₆; Kettenlänge 21; Molekulargewicht 308,4; Sauerstoffgehalt 31,1%),

Besonders geeignet ist auch Oxymethylendi(methyldiglykol)ether, C₁₁H₂₄O₆, d.h. eine Verbindung, bei der n = 2 und m = 1 ist. Die Kettenlänge beträgt 17 und das Molekulargewicht 252,3; Sauerstoffgehalt 38%.

Ebenfalls geeignet sind analoge Verbindungen und deren Gemische, die sich aus Di- und Triethylenglykolmonoalkylethern herstellen lassen.

In einer bevorzugten Ausführungsform ist R ein geradkettiger Alkylrest. Dies hat den Vorteil, dass die Rußverminderung generell höher als bei verzweigten Alkylresten ausfällt.

In einer weiteren bevorzugten Ausführungsform ist R ein Methyl-, Ethyl-, oder n-Butylrest. Derartige Verbindungen sind aufgrund der biogenen Verfügbarkeit von Methanol, Ethanol und n-Butanol besonders gut geeignet, als Biokraftstoffzusätze der 2. und 3. Generation eingesetzt zu werden.

Besonders bevorzugt ist R ein Ethyl- oder n-Butylrest, insbesondere ein n-Butylrest, da in dieser Reihenfolge die Mischbarkeit mit dem Dieselkraftstoff zunimmt. Dies hat den weiteren Vorteil, dass auf Lösungsmittel, wie FAME, im Wesentlichen verzichtet werden kann.

Die Summe der Kettenglieder (C- und O-Atome) beträgt vorzugsweise < 35, insbesondere < 30, und besonders bevorzugt etwa 11 bis etwa 21. Dies hat den Vorteil, dass durch die Zusätze die für die Kraftstoffnorm EN 590 gültige 95%-Siedegrenze von 360°C nicht überschritten wird.

In einer bevorzugten Ausführungsform wird der Polyoxymethylen-di(alkylpolyglykol)ether in einer Menge von weniger als 10 Vol.-%, und besonders bevorzugt in einer Menge von weniger als 5 Vol.-%, bezogen auf den Dieselkraftstoff, eingesetzt. Je geringer die Menge an Polyoxymethylen-di(alkylpolyglykol)ether, desto geringer sind die Zusatzkosten.

In einer weiteren bevorzugten Ausführungsform kann dem Dieselkraftstoff bis zu 5 Vol.-% FAME (EN 590), bis zu 7 Vol.-% FAME (DIN 51628) oder bis zu 10 Vol.-% FAME zugesetzt werden. Der Einsatz von FAME hat den Vorteil, dass dieses als Lösungsvermittler dient, um die Mischbarkeit der höhermolekularen Polyoxymethylendi(alkylpolyglykol)ether mit Dieselkraftstoff verbessern zu können. Auch der Einsatz von reinem Biodiesel (EN 14214) mit 100% FAME und von synthetischem Diesel (Gasto-Liquid, Biomass-to-L., Coal-to-L.) ist bevorzugt.

Die erfindungsgemäße Verwendung ist auch bei Motoren älterer Bauart möglich. D.h. eine Rückwärtskompatibilität bzw. -verträglichkeit ist ebenfalls gegeben. Dies ist ein weiterer Vorteil der Verwendung der erfindungsgemäßen Zusätze im Vergleich zum Einsatz von Polyethylenglykoldialkylethern.

Im Folgenden wird die Erfindung anhand von Beispielen weiter illustriert. Die Beispiele sollen jedoch in keiner Weise limitierend oder beschränkend für die vorliegende Erfindung sein.

### Beispiel 1

An einem MAN-Einzylinder-Forschungsmotor mit einem Hubvolumen von 1,75 l, einer Motorleistung von 55 kW, einem Common Rail Einspritzsystem (Raildruck 1800 bar), einer Verdichtung von 20,5, einem Einspritzbeginn vor dem oberen Totpunkt von -8° Kurbelwinkel und einer AGR-Rate von 20% wurde eine Kraftstoffmischung aus 95 Vol.-% Dieselkraftstoff nach EN 590 und 5 Vol.-% Oxymethylendi(methylglykol)ether (andere Bezeichnung: Bis(2-methoxyethoxy)methan; C₇H₁₆O₄, Kp. 197/205°C, Fa. Alfa Aesar, D-76057 Karlsruhe) getestet. Als Vergleichskraftstoff diente Dieselkraftstoff ohne Additivzusätze nach EN 590.

Die Rußminderung wurde mit einem Micro Soot Sensor der Fa. AVL bestimmt.

Die Ergebnisse sind in nachstehender Tabelle 1 zu entnehmen.

**Tabelle 1**

| Betriebspunkt | BP 1 | BP 2 | BP 3 | BP 4 |
|---|---|---|---|---|
| Rußminderung (NOₓ-Emissionsniveau konstant) % | - 42,7 | - 51,1 | - 51,6 | - 28,2 |
| Drehzahl U/min | 914 | 1542 | 1542 | 1800 |
| Drehmoment Nm | 75 | 200 | 270 | 140 |
| Mitteldruck bar | 6,3 | 15,7 | 20,7 | 11,7 |
| Luftzahl | 3,1 | 1,35 | 1,35 | 1,9 |

Dieser Versuch zeigt, dass der Zusatz von geringen Mengen von Oxymethylendi(methylglykol)ether zu Dieselkraftstoff zu einer deutlichen Rußminderung führt, die um so höher ausfällt, je niedriger der Luftüberschuss bei der Verbrennung ist (siehe Luftzahl in Tabelle 1).

### Beispiel 2

An dem in Beispiel 1 beschriebenen Versuchsmotor wurde eine Kraftstoffmischung aus 95 Vol.-% Dieselkraftstoff nach EN 590 und 5 Vor.-% Oxymethylendi(methyldiglykol)ether, (Kp. 315/325°C, Fa. DWS Synthesetechnik, D-86356 Neusäß) getestet.

Bei den im Beispiel 1 beschriebenen Betriebspunkten wurde mit dem Micro Soot Sensor folgende Rußminderung bei der Kraftstoffmischung im Vergleich zu einem Dieselkraftstoff nach EN 590 gefunden, wobei das NOₓ-Emissionsniveau konstant gehalten wurde. Die Ergebnisse sind in nachstehender Tabelle 2 zu entnehmen.

**Tabelle 2**

| Betriebspunkt | BP 1 | BP 2 | BP 3 | BP 3 |
|---|---|---|---|---|
| Rußminderung (NOₓ-Emissionsniveau konstant) % | - 43,6 | - 54,1 | - 54,0 | -28,5 |

Auch dieser Versuch zeigt, dass ein Zusatz von Oxymethylendi(methyldiglykol)ether zu einer deutlichen Rußminderung führt, die um so höher ausfällt, je niedriger der Luftüberschuss bei der Verbrennung ist (siehe Luftzahl in Tabelle 1). Oxymethylendi(methyldiglykol)ether enthält pro Molekül vier Ethylenglykolgruppen pro Oxymethylengruppe und dadurch eine etwas höhere Rußminderungsaktivität als der in Beispiel 1 aufgeführte Oxymethylendi(methylglykol)ether, der pro Molekül nur zwei Ethylenglykolgruppen pro Oxymethylengruppe enthält.

### Vergleichsbeispiel 1:

Unter den in Beispiel 1 beschriebenen Versuchsbedingungen wurde eine Kraftstoffmischung aus 95 Vol.-% Dieselkraftstoff nach EN 590 und 5 Vol.-% Tetraethylenglykoldimethylether getestet.

Die Ergebnisse sind in nachstehender Tabelle 3 zu entnehmen. Als Vergleich diente nicht-additivierter Dieselkraftstoff nach EN 590.

**Tabelle 3**

| Betriebspunkt | BP 1 | BP 2 | BP 3 | BP 3 |
|---|---|---|---|---|
| Rußminderung (NOₓ-Emissionsniveau konstant) % | - 41,2 | - 54,1 | - 52,9 | -27,4 |

### Vergleichsbeispiel 2:

Unter den in Beispiel 1 beschriebenen Versuchsbedingungen wurde eine Kraftstoffmischung aus 95 Vol.-% Dieselkraftstoff nach EN 590 und 10 Vol.-% Methylal (Oxymethylendimethylether) getestet.

Die Ergebnisse sind nachstehender Tabelle 4 zu entnehmen. Als Vergleichskraftstoff diente nichtadditivierter Dieselkraftstoff nach EN 590.

**Tabelle 4**

| Betriebspunkt | BP 1 | BP 2 | BP 3 | BP 3 |
|---|---|---|---|---|
| Rußminderung (NOₓ-Emissionsniveau konstant) % | -49,2 | - 37,4 | - 41,2 | - 22,7 |

## Patentansprüche

1. Verwendung von Polyoxymethylendi(alkylpolyglykol)ethern der allgemeinen Formel
RO(CH₂CH₂O)ₙ(CH₂O)ₘ(CH₂CH₂O)ₙR,
wobei R ein Alkylrest, n ≤ 3 und m ≤ 6 ist,
als Zusatz zu Dieselkraftstoffen zur Verminderung der Rußemission in Selbstzündungsmotoren, wobei die Polyoxymethylendi(alkylpolyglykol)ether in einer Menge von weniger als 15 Vol.-%, bezogen auf den Dieselkraftstoff, eingesetzt werden.

2. Verwendung nach Anspruch 1, **dadurch gekennzeichnet, dass** n = 1 und m ≤ 6 ist.

3. Verwendung nach Anspruch 1, **dadurch gekennzeichnet, dass** n = 1 oder 2 und m ≤ 3 ist.

4. Verwendung nach Anspruch 1, **dadurch gekennzeichnet, dass** n = 1 oder 2 und m = 1 ist.

5. Verwendung nach Anspruch 1, **dadurch gekennzeichnet, dass** n ist 1 und m ≤ 6 ist.

6. Verwendung nach Anspruch 1, **dadurch gekennzeichnet, dass** n ist 1 und m ≤ 3 ist.

7. Verwendung nach einem der vorangegangenen Ansprüche, **dadurch gekennzeichnet, dass** n ist 1 und m ist 1.

8. Verwendung nach einem der vorangegangenen Ansprüche, **dadurch gekennzeichnet, dass** R ein geradkettiger Alkylrest ist.

9. Verwendung nach einem der vorangegangenen Ansprüche, **dadurch gekennzeichnet, dass** R ein Methyl-, Ethyl- oder n-Butylrest ist.

10. Verwendung nach einem der vorangegangenen Ansprüche, **dadurch gekennzeichnet, dass** die Summe der Kettenglieder (C- und O-Atome) der Polyoxymethylendi(alkylpolyglykol)ether ≤ 35, vorzugsweise ≤ 30, und besonders bevorzugt 11 bis 25 beträgt.

11. Verwendung nach einem der vorangegangenen Ansprüche, **dadurch gekennzeichnet, dass** die Polyoxymethylendi(alkylpolyglykol)ether in einer Menge von weniger als 10 Vol.-% und bevorzugt in einer Menge von weniger als 5 Vol.-%, bezogen auf den Dieselkraftstoff, vorliegt.

12. Verwendung nach einem der vorangegangenen Ansprüche, **dadurch gekennzeichnet, dass** der Dieselkraftstoff bis zu 5 Vol.-% FAME, bis zu 7 Vol.-% FAME, oder bis zu 10 Vol.-% FAME enthält oder ein reiner FAME-Biodieselkraftstoff oder synthetischer Dieselkraftstoff ist.

## Claims

1. Use of polyoxymethylenedi(alkylpolyglycol)ethers with the general formula
RO(CH₂CH₂O)ₙ(CH₂O)ₘ(CH₂CH₂O)ₙR,
wherein R is an alkyl residue, n ≤ 3 and m ≤ 6,
as an additive for diesel fuels to reduce the soot emission in compression ignition engines, wherein the polyoxymethylenedi(alkylpolyglycol)ethers are used in an amount of less than 15 Vol.%, with respect to the diesel fuel.

2. Use as claimed in Claim 1, **characterised in that** n = 1 and m ≤ 6.

3. Use as claimed in Claim 1, **characterised in that** n = 1 or 2 and m ≤ 3.

4. Use as claimed in Claim 1, **characterised in that** n = 1 or 2 and m = 1.

5. Use as claimed in Claim 1, **characterised in that** n is 1 and m ≤ 6.

6. Use as claimed in Claim 1, **characterised in that** n is 1 and m ≤ 3.

7. Use as claimed in one of the preceding claims, **characterised in that** n is 1 and m is 1.

8. Use as claimed in one of the preceding claims, **characterised in that** R is a straight chain alkyl residue.

9. Use as claimed in one of the preceding claims, **characterised in that** R is a methyl, ethyl or n-butyl residue.

10. Use as claimed in one of the preceding claims, **characterised in that** the sum of the chain elements (C and O atoms) in the polyoxymethylenedi(alkylpolyglycol)ether is ≤ 35, preferably ≤ 30 and particularly preferably 11 to 25.

11. Use as claimed in one of the preceding claims, **characterised in that** the polyoxymethylenedi(alkylpolyglycol)ether is present in an amount of less than 10 vol.% and preferably in an amount of less than 5 vol.%, with respect to the diesel fuel.

12. Use as claimed in one of the preceding claims, **characterised in that** the diesel fuel contains up to 5 vol.% FAMEs, up to 7 vol.% FAMEs or up to 10 vol.% FAMEs or is a pure FAME biodiesel fuel or a synthetic diesel fuel.

## Revendications

1. Utilisation de polyoxyméthylènedi(alkylpolyglycol)-éthers de formule générale
RO (CH₂CH₂O)ₙ(CH₂O)ₘ(CH₂CH₂O)ₙR,
dans laquelle R est un radical alkyle, n ≤ 3 et m ≤ 6, comme additif de carburants diesel pour diminuer l'émission de suie dans les moteurs à auto-allumage, les polyoxyméthylènedi(alkylpolyglycol)éthers étant mis en oeuvre en une quantité inférieure à 15 % en volume, par rapport au carburant diesel.

2. Utilisation selon la revendication 1, **caractérisée en ce que** n = 1 et m ≤ 6.

3. Utilisation selon la revendication 1, **caractérisée en ce que** n = 1 ou 2 et m ≤ 3.

4. Utilisation selon la revendication 1, **caractérisée en ce que** n = 1 ou 2 et m = 1.

5. Utilisation selon la revendication 1, **caractérisée en ce que** n est égal à 1 et m ≤ 6.

6. Utilisation selon la revendication 1, **caractérisée en ce que** n est égal à 1 et m ≤ 3.

7. Utilisation selon l'une des revendications précédentes, **caractérisée en ce que** n est égal à 1 et m est égal à 1.

8. Utilisation selon l'une des revendications précédentes, **caractérisée en ce que** R est un radical alkyle linéaire.

9. Utilisation selon l'une des revendications précédentes, **caractérisée en ce que** R est un radical méthyle, éthyle ou n-butyle.

10. Utilisation selon l'une des revendications précédentes, **caractérisée en ce que** la somme des éléments des chaînes (atomes de C et de 0) des polyoxyméthylènedi(alkylpolyglycol)éthers ≤ 35, de préférence ≤ 30, et est tout particulièrement préférentiellement égale à un nombre de 11 à 25.

11. Utilisation selon l'une des revendications précédentes, **caractérisée en ce que** les polyoxyméthylènedi(alkylpolyglycol)éthers sont présents en une quantité inférieure à 10 % en volume et de préférence en une quantité inférieure à 5 % en volume, par rapport au carburant diesel.

12. Utilisation selon l'une des revendications précédentes, **caractérisée en ce que** le carburant diesel contient jusqu'à 5 % en volume de FAME, jusqu'à 7 % en volume de FAME, ou jusqu'à 10 % en volume de FAME ou est un biocarburant diesel FAME pur ou un carburant diesel synthétique.
